(19) Europäisches Patentamt
European Patent Office
Office européen des brevets

(11) Publication number: 0 483 818 A2

# (12) EUROPEAN PATENT APPLICATION

(21) Application number: 91118549.4

(22) Date of filing: 30.10.91

(51) Int. Cl.5: C09D 163/02

(30) Priority: 31.10.90 US 606245

(43) Date of publication of application:
06.05.92 Bulletin 92/19

(84) Designated Contracting States:
DE FR GB

(71) Applicant: DOW CORNING CORPORATION
P.O. Box 1767
Midland Michigan 48686-0994(US)

(72) Inventor: Cottington, Levi James
21 Erie Court
Midland, Michigan(US)
Inventor: Fryrear, David William, c/o Lilly Research Lab.
2001 W.Main Street
Greenfield, Indiana 46140(US)

(74) Representative: Spott, Gottfried, Dr. et al
Spott Weinmiller & Partner
Sendlinger-Tor-Platz 11
W-8000 München 2(DE)

## (54) Abrasion resistant thermal cure epoxy coating.

(57) A thermal cure protective coating composition is disclosed which contains an epoxide having at least two epoxy groups per molecule, colloidal silica and a hardener. When applied to a substrate and thermally cured, the composition forms a protective, abrasion resistant, weather resistant, ultraviolet light resistant, coating firmly held thereon.

EP 0 483 818 A2

This invention relates to a thermal cure protective coating composition. More specifically, it relates to a coating composition containing an epoxide having at least two epoxy groups per molecule, colloidal silica and a hardener. The coating compositions of the present invention can be used as coating agents to enhance the abrasion resistance and weather resistance of the surface of metals without using a silane.

Epoxides have been incorporated into abrasion resistant coating compositions which contain silanes. For example, U.S. Patent No. 4,525,421, issued June 25, 1985 discloses an abrasion resistant coating composition containing a silane, colloidal silica, a polyfunctional epoxy compound and magnesium perchlorate. In addition, U.S. Patent No. 4,049,861, issued September 20, 1977 describes an abrasion resistant coating composition which contains an epoxy terminated silane and a catalyst. The present invention has eliminated the need for silanes in abrasion resistant coating compositions which contain epoxides.

Japanese Kokai Patent No. Sho 63[1988]-286409 issued November 24, 1988, discloses abrasion resistant coating compositions containing an $\alpha$, $\beta$-unsaturated carboxylic acid compound and colloidal silica. Such $\alpha$, $\beta$-unsaturated carboxylic acid compounds include ester derivatives such as organic compounds containing epoxy groups. However, the $\alpha,\beta$-unsaturated carboxylic acid compounds do not include the epoxide compounds of the present invention.

Accordingly, the foremost objective of the present invention is to provide a silane-free protective coating for solid substrates.

Another object of this invention is to provide an improved abrasion resistant coating composition which contains epoxides and is thermally cured.

These and other objects are accomplished herein by a thermal cure epoxide coating composition containing:

(A) an epoxide having at least two epoxy groups per molecule selected from the group consisting of diglycidyl ether of Bisphenol A, vinylcyclohexene dioxide, 3,4-epoxycyclohexyl-methyl-3,4-epoxycyclohexene carboxylate, 3,4-epoxy-6-methylcyclo-hexylmethyl-3,4-epoxy-6-methylcyclohexene carboxylate, bis-(2,3-epoxy-6-methylcyclohexylmethyl)adipate, tetraglycidylated methylene dianiline, bis(2,3-epoxycyclopentyl) ether, aliphatic epoxy modified with propylene glycol and dipentene dioxide;

(B) colloidal silica; and

(C) a hardener.

The term epoxide includes those compounds with at least two epoxy groups per molecule. Such epoxides include monomeric epoxy compounds and epoxides of the polymeric type and can be aliphatic, cycloaliphatic, aromatic or heterocyclic. The epoxy groups can be terminal epoxy groups or internal epoxy groups. The epoxides may vary from low molecular weight monomeric materials to high molecular weight polymers and may vary in the nature of their backbone and substituent groups. For example, the backbone may be of any type and substituent groups thereon can be any group not having an active hydrogen atom which is reactive with an epoxy ring. Illustrative of permissible substituent groups include halogens, ester groups, ethers, sulfonate groups, nitro groups, amide groups, nitrile groups and phosphate groups. The molecular weight of the epoxides may vary from 58 to about 100,000. Mixtures of epoxides can also be used. Some of the epoxy compounds which can be used in this invention include diglycidyl ether of Bisphenol A, such as those available under the tradenames Epon® 828, Epon® 1004, Epon® 1001F and Epon® 1010 from Shell Chemical Company, Houston, Texas; vinylcyclohexene dioxide; 3,4-epoxycyclohexylmethyl-3,4-epoxycyclohexene carboxylate; 3,4-epoxy-6-methylcyclohexyl-methyl-3,4-epoxy-6-methylcyclohexene carboxylate; bis(2,3-epoxy-6-methylcyclohexylmethyl)adipate; tetraglycidylated methylene dianiline, such as Araldite® MY-720 from Ciba-Geigy Corporation, Hawthorne, New York; bis(2,3-epoxy-cyclopentyl) ether; aliphatic epoxy modified with propylene glycol; and dipentene dioxide. The preferred epoxy compounds are Epon® 828 believed to have the formula:

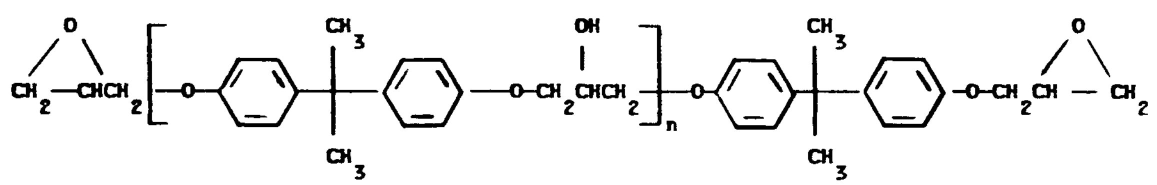

wherein n is approximately 1.4 and Araldite® MY-720 believed to have the formula:

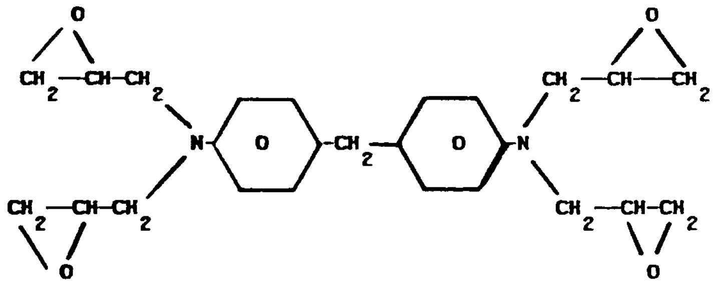

Colloidal silica useful as component (B) of the present invention includes that which is dispersed in an organic solvent such as an alcohol, ether, ketone, ester, aromatic hydrocarbon or mixtures thereof and that which is dispersed in an organic solvent and water combination. Some preferred examples of colloidal silica include Nalco 1129 colloidal silica and Nalco 84SS258 colloidal silica, available from Nalco Chemical Company, Naperville, IL. Nalco 1129 colloidal silica has a mean particle size of 20 nanometers and an $SiO_2$ content of approximately 30% by weight in a solution of 40% isopropanol and 30% water. Nalco 84SS258 colloidal silica has a mean particle size of 20 nanometers and an $SiO_2$ content of approximately 30% by weight in a solution of propoxyethanol.

The epoxide compositions of the present invention are cured with a hardener, also referred to as a curing agent. Commonly used hardeners include anhydrides of carboxylic acids such as pyromellitic acid dianhydride, bis-2,2-(4- phthalicanhydrido)hexafluoropropane, benzophenone tetracarboxylic acid dianhydride, bisphenol A dianhydride, methyl tetrahydrophthalic anhydride, dodecenylsuccinic anhydride, hexahydrophthalic anhydride, chlorendic anhydride and trimellitic anhydride; compounds with active hydrogen, such as aliphatic amines, polyamides and aromatic amines including sulfanilamide, dicyandiamide, diaminodiphenyl sulfone, diethylenetriamine, triethylenetetramine, isophorone diamine, bis(p-aminocyclohexyl)-methane, n-aminoethylpiperazine, metaphenylenediamine, methylene dianiline and 4,4-[1,4-phenylene(1-methylethylidene)]bis(2,6-dimethylbenzenamine),such as EPON® HPT Curing Agent 1062-M, available from Shell Chemical Company, Houston, Texas; and Lewis acid/amine complexes, such as boron trifluoride/monoethylamine, boron trifluoride/piperidiene, boron trifluoride/methylimidazole and chlorinated derivatives of 1,1-dimethyl-3-phenyl urea. The preferred hardeners are diaminodiphenyl sulfone and 4,4-[1,4-phenylene(1-methylethylidene)]bis(2,6-dimethylbenzenamine). The amount of hardener needed to cure the epoxide compositions of the present invention is from 0.05 to 1.5 equivalent weight of hardener per one equivalent weight of the epoxide; preferably, about 0.2 to 1.0 equivalent weight of hardener is used per one equivalent weight of epoxide. Depending upon the nature of the hardener, curing can be performed at room temperature or at elevated temperatures.

In preparing the compositions of the present invention, the epoxide and colloidal silica are combined by mixing from 20 to 98 weight percent of the epoxide and from 1 to 70 weight percent of the colloidal silica. The solvent in which the colloidal silica is dispersed, is removed by heating the mixture at reduced pressure. The appropriate equivalent weight of hardener is added. The resulting mixture is heated for 5 to 35 minutes at temperatures ranging from 90° C. to 160° C., with care taken to not cure the material. Prior to applying the mixture to a substrate, the substrate may be preheated. The coated substrate is heated at a temperature ranging from 150° C. to 250° C. for at least one hour. It is preferred to heat the substrate under reduced pressure for a period of one to five hours to remove trace amounts of solvent and air bubbles, before gradually increasing the temperature to 180° C. for purposes of curing. Following the cure, thermal shock can be minimized by gradually allowing the coated substrate to cool to ambient temperature.

Many other ingredients can be added to the compositions of this invention to enhance the usefulness of the coatings. For example, leveling agents, UV absorbers, dyes and solvents can be included herein.

The thermal cure epoxide compositions are coated on a substrate using conventional coating techniques modified as appropriate to the particular substrate. For example, these compositions can be applied to a variety of solid substrates by methods such as roller coating, flow coating, dip coating, spin coating, spray coating, rod coating and curtain coating. These various methods of coating allow the compositions to be placed on a substrate at variable thicknesses thus allowing a wider range of use of the compositions. Coating thicknesses may vary, but for improved abrasion resistance coating thicknesses 2-25 microns, or about 5 microns, are preferred.

The compositions of the present invention can be applied and will adhere to substantially all solid substrates. Examples of suitable substrates are metals such as aluminum, iron, steel, silver and chromium; ceramic materials such as glass fused ceramic sheeting and fibers; thermoset resins such as epoxy resins,

polysilanes and polysiloxanes; natural resins such as rubber, gelatin; and thermoplastic resins which exhibit thermal stability at temperatures approaching 200°C. The compositions of this invention are especially useful as coatings for metals.

The apparatus and testing procedures used to illustrate the concepts in accordance with the present invention are set forth as follows:

The Tabor wear Index, that is the rate of wear, was determined according to Federal Test Method 1091. The instrument used was a Teledyne Taber model 503 Taber Abraser with two 250 gram auxiliary weights (500 gram load) for each of the CS10F abrasive wheels. The steel test panels were subjected to 100 and 500 cycles on the abraser turntable. The Tabor wear index (rate of wear) is the loss in weight in milligrams per thousand cycles of abrasion for a test performed under a specific set of conditions. The lower the wear index, the better the abrasion resistance quality of the material. For example, if a steel test panel is abraded 500 cycles and loses 2.2 milligrams of material, the wear index would be 4.4. Likewise, a material that withstood 100 cycles of abrasion and lost 8.1 milligrams of material would have a wear index of 81.0. The following equation was used to calculate the Tabor wear index in the Examples:

$$\text{Tabor Wear Index} = \frac{\text{Panel weight loss (mg)} \times 1000}{\text{Number of cycles (100 or 500)}}$$

Adhesion was measured by cross-hatch adhesion. A series of cross-hatch scribes were made in an area of one square inch with lines to form 1/10 inch squares. This surface was covered with 1.0 inch No. 600 Scotch Brand adhesive tape which was pressed down firmly over the cross-hatched area. The tape was withdrawn from the surface of the substrate with one rapid motion at about a 90° angle. This action of applying and removing the tape was carried out three times and then the substrate was observed. The number of squares remaining intact on the substrate was reported as a percentage of the total number of squares on the grid.

In the Steel Wool Test, a two inch square of No. 0000 steel wool was applied over the face of a 24 oz. hammer and was secured with a rubber band. Coated sample blanks were tested for scratch resistance to 20 double rubs across the center of the sample with the weighted steel wool. The hammer was held by the end of its handle such that the majority of the pressure on the steel wool came from the hammer head. The sample was graded according to the amount of scratching produced by the steel wool and hammer. The absence of scratches on the sample was graded one; slight scratching was graded two; and heavy scratching was graded three.

The Pencil Test was meant to be a qualitative method of determining scratch resistance of a coating. A coated panel was placed on a firm horizontal surface. A pencil was held firmly against the film at a 45° angle with the point away from the operator and pushed away from the operator in a 1/4 inch stroke. The process was started with the hardest lead pencil and continued down the scale of hardness to the pencil that would not cut into or gouge the film. The hardest pencil that would not cut through the film to the substrate for a distance of at least 1/8 inch was reported according to the following scale from Berol Corporation, Brentwood, Tennessee:

-----------softer-----        -------------harder--------------

6B, 5B, 4B, 3B, 2B, B, HB, F, H, 2H, 3H, 4H, 5H, 6H, 7H, 8H, 9H.

The HB grade is approximately equal to that of a #2 pencil. The F grade is slightly harder and is the one most commonly used. The H grades are harder than that and get progressively harder up through the 9H grade which is very hard. The B grade is softer than the HB grade and get progressively softer through the 6B grade which is very soft.

The invention will be further illustrated by a consideration of the following examples. All parts and percentages in the examples are on a weight basis unless otherwise stated.

Example I

A mixture of 10.05 grams of EPON® 828 and 18.43 grams of Nalco 84SS258 were placed in a flask. The flask was placed in a 145°C. oil bath for 15 minutes and agitation was applied. While in the oil bath, a vacuum at 10mm Hg was applied to the mixture. The flask was removed from the oil bath and 3.3 grams of diaminodiphenyl sulfone was added. The mixture was stirred until homogenous. The flask was placed into a 145°C. oil bath for 15 minutes during which time agitation was applied. The mixture was flow coated onto a 3 x 9 x 1/16 inch aluminum panel and a 4 x 4 x 1/16 inch steel panel. The panels had been preheated to 110°C. The coated panels were placed in a vacuum oven for a period of four hours at 130°C. under about 2mm Hg. The panels were transferred to a programmable oven preheated to 130°C. The temperature of the oven was raised 12.5°C. an hour for a period of four hours, at which time the temperature was maintained at 180°C. for two hours. The oven was cooled at a rate of 38.75°C. an hour to 25°C. over a period of four hours. The test results are summarized in Tables I and II.

Example II

A mixture of 22.0 grams of EPON® 828 and 18.0 grams of Nalco 84SS258 were placed in a flask. The flask was placed in a 145°C. oil bath for 15 minutes and agitation was applied. While in the oil bath, a vacuum at 10mm Hg was applied to the mixture. The flask was removed from the oil bath and 7.17 grams of diaminodiphenyl sulfone was added. The mixture was stirred until homogenous. The flask was placed into a 145°C. oil bath for 15 minutes during which time agitation was applied. The mixture was flow coated onto a 3 x 9 x 1/16 inch aluminum panel and a 4 x 4 x 1/16 inch steel panel. The panels had been preheated to 110°C. The coated panels were placed in a vacuum oven for a period of four hours at 130°C. under about 2mm Hg. The panels were transferred to a programmable oven preheated to 130°C. The temperature of the oven was raised 12.5°C. an hour for a period of four hours, at which time the temperature was maintained at 180°C. for two hours. The oven was cooled at a rate of 38.75°C. an hour to 25°C. over a period of four hours. The test results are summarized in Tables I and II.

Example III

A mixture of 40.7 grams of EPON® 828 and 38.1 grams of Nalco 84SS258 were placed in a flask. The flask was placed in a 145°C. oil bath for 15 minutes and agitation was applied. While in the oil bath, a vacuum at 10mm Hg was applied to the mixture. The flask was removed from the oil bath and 21.3 grams of diaminodiphenyl sulfone was added. The mixture was stirred until homogenous. The flask was placed into a 145°C. oil bath for 15 minutes during which time agitation was applied. The mixture was flow coated onto a 3 x 9 x 1/16 inch aluminum panel and a 4 x 4 x 1/16 inch steel panel. The panels had been preheated to 110°C. The coated panels were placed in a vacuum oven for a period of four hours at 130°C. under about 2mm Hg. The panels were transferred to a programmable oven preheated to 130°C. The temperature of the oven was raised 12.5°C. an hour for a period of four hours, at which time the temperature was maintained at 180°C. for two hours. The oven was cooled at a rate of 38.75°C. an hour to 25°C. over a period of four hours. The test results are summarized in Tables I and II.

Example IV

A mixture of 20.1 grams of EPON® 828 and 54.3 grams of Nalco 84SS258 were placed in a flask. The flask was placed in a 145°C. oil bath for 15 minutes and agitation was applied. While in the oil bath, a vacuum at 10mm Hg was applied to the mixture. The flask was removed from the oil bath and 6.6 grams of EPON® HPT™ Curing Agent 1062-M, was added. The mixture was stirred until homogenous. The flask was placed into a 145°C. oil bath for 15 minutes during which time agitation was applied. The mixture was flow coated onto a 3 x 9 x 1/16 inch aluminum panel and a 4 x 4 x 1/16 inch steel panel. The panels had been preheated to 110°C. The coated panels were placed in a vacuum oven for a period of four hours at 130°C. under about 2mm Hg. The panels were transferred to a programmable oven preheated to 130°C. The temperature of the oven was raised 12.5°C. an hour for a period of four hours, at which time the temperature was maintained at 180°C. for two hours. The oven was cooled at a rate of 38.75°C. an hour to 25°C. over a period of four hours. The test results are summarized in Tables I and II.

Example V

A mixture of 9.87 grams of Araldite MY 720 and 9.03 grams of Nalco 84SS258 were placed in a flask. The flask was placed in a 145° C. oil bath for 15 minutes and agitation was applied. While in the oil bath, a vacuum at 10mm Hg was applied to the mixture. The flask was removed from the oil bath and 4.87 grams of diaminodiphenyl sulfone was added. The mixture was stirred until homogenous. The flask was placed into a 145° C. oil bath for 15 minutes during which time agitation was applied. The mixture was flow coated onto a 3 x 9 x 1/16 inch aluminum panel and a 6 x 6 x 1/16 inch glass panel. The panels had been preheated to 110° C. The coated panels were placed in a vacuum oven for a period of four hours at 130° C. under about 2mm Hg. The panels were transferred to a programmable oven preheated to 130° C. The temperature of the oven was raised 12.5° C. an hour for a period of four hours, at which time the temperature was maintained at 180° C. for two hours. The oven was cooled at a rate of 38.75° C. an hour to 25° C. over a period of four hours. The test results are summarized in Tables II and III.

Example VI

A flask containing 40.1 grams of EPON® 828 was heated in an oven. When the oven temperature reached 80° C., 14.2 grams of diaminodiphenyl sulfone was added. The mixture was stirred until homogenous. The flask was placed into a 145° C. oil bath for 15 minutes during which time agitation was applied. The mixture was flow coated onto a 3 x 9 x 1/16 inch aluminum panel and a 4 x 4 x 1/16 inch steel panel. The panels had been preheated to 110° C. The coated panels were placed in a vacuum oven for a period of four hours at 130° C. under about 2mm Hg. The panels were transferred to a programmable oven preheated to 130° C. The temperature of the oven was raised 12.5° C. an hour for a period of four hours, at which time the temperature was maintained at 180° C. for two hours. The oven was cooled at a rate of 38.75° C. an hour to 25° C. over a period of four hours. The test results are summarized in Table I.

TABLE I

| Properties of Coated Steel | | | | |
|---|---|---|---|---|
| Coating Compositions | ADHESION TEST | STEEL WOOL | PENCIL TEST | TABOR WEAR INDEX $H_{100}/H_{500}$ |
| Ex. I | 100% | 2 | 3H | 2.0/4.4 |
| Ex. II | 100% | 2 | 2H | 118.0/157.0 |
| Ex. III | 100% | 2 | 2H | 81.0/27.6 |
| Ex. IV | 100% | 2 | 3H | 98.0/24.0 |
| Ex. VI | 100% | 2 | 3H | 427.0/152.0 |

The results in Table I indicate that coating compositions containing epoxides having at least two epoxy groups per molecule, colloidal silica and a hardener form improved abrasion resistant coatings on metal substrates when compared to similar coating formulations wherein the colloidal silica is absent.

TABLE II

| Properties of Coated Aluminum | | | |
|---|---|---|---|
| Coating Composition | ADHESION TEST | STEEL WOOL | PENCIL TEST |
| Ex. I | 100% | 2 | 2H |
| Ex. II | 100% | 2 | 2H |
| Ex. III | 100% | 2 | 2H |
| Ex. IV | 100% | 2 | 3H |
| Ex. V | 100% | 2 | 7H |

The results in Table II indicate that different types of epoxides and hardeners may be incorporated into the coating compositions of the present invention to form superior abrasion resistant coatings on aluminum substrates.

TABLE III

| Properties of Coated Glass | | | |
|---|---|---|---|
| Coating Composition | ADHESION TEST | STEEL WOOL | PENCIL TEST |
| Ex. V | 100% | 2 | 7H |

The results in Table III indicate that the coating compositions of the present invention readily adhere to and form superior abrasion resistant coatings on glass substrates.

It will be apparent from the foregoing that many other variations and modifications may be made in the structures, compounds, compositions and methods described herein without departing substantially from the essential features and concepts of the present invention. Accordingly, it should be clearly understood that the forms of the invention described herein are exemplary only and are not intended as limitations on the scope of the present invention.

**Claims**

**1.** A thermal cure coating composition comprising:
(A) 20 to 98 percent by weight of an epoxide having at least two epoxy groups per molecule selected from the group consisting of diglycidyl ether of Bisphenol A, vinylcyclohexene dioxide, 3,4-epoxycyclohexylmethyl-3,4-epoxycyclohexene carboxylate, 3,4-epoxy-6-methylcyclohexylmethyl-3,4-epoxy-6-methylcyclohexene carboxylate, bis(2,3-epoxy-6-methylcyclohexylmethyl)adipate, tetraglycidylated methylene dianiline, bis(2,3-epoxycyclopentyl) ether, aliphatic epoxy modified with propylene glycol and dipentene dioxide;
(B) 1 to 70 percent by weight of colloidal silica; and
(C) a hardener in a sufficient amount to cure the composition.

**2.** The composition of claim 1 wherein component (B) is a dispersion of colloidal silica in at least one organic solvent.

**3.** The composition of claim 1 wherein component (B) is a dispersion of colloidal silica in an organic solvent and water.